# EUROPÄISCHE PATENTANMELDUNG

(11) **EP 1 710 647 A2**
(43) Veröffentlichungstag der Anmeldung: **11.10.2006**
(21) Anmeldenummer: 06006349.2
(22) Anmeldetag: 28.03.2006
(51) Int. Cl.: G05B 19/418, G05B 19/05, G05B 19/048, G05B 23/02

(54) **Integration von Feldgeräten in ein Automatisierungssystem**

(30) Priorität: 08.04.2005 DE 102005016542
(71) Anmelder: ABB PATENT GmbH, 68526 Ladenburg (DE)
(72) Erfinder: Garrels, Kai, Dipl.-Ing., 68239 Mannheim (DE); Zank, Gunnar, Dipl.-Ing., 06179 Teutschenthal (DE)
(74) Vertreter: Miller, Toivo

(57) **Zusammenfassung**

Die Erfindung betrifft ein System und Verfahren zur Integration von intelligenten Feldgeräten (30) in ein Automatisierungssystem mit mehreren über eine Kommunikationsverbindung verbundener Feldgeräte (30) zur Steuerung und Überwachung einer technischen Anlage (20), mit wenigstens einem ersten Werkzeug (10) zur Verwaltung, Konfiguration, Parametrierung, Bedienung, Beobachtung, Wartung und/oder Diagnose der technischen Anlage (20), mit wenigstens einer Softwarekomponente (50) zur Konfigurierung und/oder Parametrierung des jeweiligen Feldgerätes(30), mit wenigstens einem zweiten Werkzeug (FDT) zur Bereitstellung einer Kommunikationsschnittstelle (40) für den Datenaustausch zwischen der Softwarekomponente (50) des jeweiligen Feldgerätes (30) und dem ersten Werkzeug (10). In der wenigstens einen Softwarekomponenten (50) ist eine Programmiersoftware (70) zur Programmierung einer Automatisierungsfunktion und Integration des jeweiligen Feldgerätes (30) im Automatisierungssystem vorhanden.

## Beschreibung

Die Erfindung betrifft die Integration von intelligenten Feldgeräten, insbesondere Motorschutz- und Steuergeräte, Frequenzumrichter, Druck- und Temperaturmessumformer, Durchflussmesser und Stellungsregler, in ein Automatisierungssystem. Außerdem bezieht sich die Erfindung auf ein Verfahren zum Betreiben eines solchen Systems.

Zur Beschreibung und Programmierung eines Automatisierungssystems, welches insbesondere als SPS- System oder Prozessleitsystem ausgeführt ist, wird für die Beschreibung der Automatisierungsfunktion eine Programmiersoftware, auch als Programm für die Automatisierungsaufgabe bezeichnet, vorgesehen. Das Programm für die Beschreibung der Automatisierungsfunktion ist üblicherweise in einer der standardisierten Programmiersprachen der Norm IEC 61131-3 ausgeführt. Diese Programmiersprachen können auch zur Beschreibung der Verarbeitungsfunktionen in einem intelligenten Feldgerät verwendet werden.

Gegenwärtig werden Kleinsteüerungen, auch als einfache SPS (speicherprogrammierbare Steuerung) bezeichnet, als lokale Feldgeräte eingesetzt. Dies erweitert den Umfang der Beschreibung und Programmierung des Automatisierungssystems von herkömmlichen Feldgeräten auch auf Kleinsteuerungen.

Zur Integration der Feldgeräte in das Automatisierungssystem wird für jeden Feldgerätetyp vom Gerätehersteller eine Softwarekomponente bereitgestellt, welche die notwendigen Bedienoberflächen zum Konfigurieren, Parametrieren, Bedienen und/oder Beobachten enthält. Gegebenenfalls sind zusätzlich Bedienoberflächen zum Ablesen von Wartungs- und Diagnoseinformationen vorgesehen. Die aktive Softwarekomponente, auch als Device Type Manager (DTM) bezeichnet, ist die Konfigurations- und Verwaltungskomponente für die Feldgeräte und kann auf einer speziellen FDT (Field Device Tool)- Technologie für den einfachen Umgang mit den Feldgeräten beruhen, die Ingenieuren und Technikern einen vollständigen Zugriff für die Konfiguration eines Feldgeräts mit einer umfangreichen grafischen Benutzerschnittstelle, der Graphic User Interface(GUI), bietet. Die FDT- Technologie, welche beispielsweise auf der Internetseite der FDT Joint Group (www.fdt-jig.org) beschrieben ist, ist als offene Spezifikation geräteherstellerunabhängig. Es sind jedoch auch andere Technologien, wie die Verwendung von Java-Applets, die in einer Java Umgebung ausgeführt werden, zur Realisierung von DTMs bekannt.

Die jeweiligen Softwarekomponenten werden von den Geräteherstellern als Programm den entsprechenden Feldgeräten beigefügt und laufen in einer Rahmenapplikation, dem Field Device Tool (FDT). Dabei wird dem Device Type Manager ein Satz Standardschnittstellen eines Engineering- Werkzeuges zur Kommunikation mit den Feldgeräten bereitstellt, wobei das Field Device Tool auch eine Datenhaltung für die Engineering- Daten, wie Parameter, Konfigurationsinformationen, Zugriffinformationen oder historische Prozessdaten, jedem in das Automatisierungssystem eingebundenem Feldgerät von einer zentralen Steuereinheit ermöglicht. Somit legt das Field Device Tool eine Kommunikationsschnittstelle für den Datenaustausch zwischen Softwarekomponenten der Feldgeräte und einem Engineering-Werkzeug fest.

Die getrennte Ausführung der Programmierung der Verarbeitungsfunktionen in den Feldgeräten des Automatisierungssystems und die mittels des Device Type Managers und des Field Device Tools ausgeführte Konfiguration und Parametrierung der Feldgeräte führen zu einem erheblichen Zeit- und Kostenaufwand während der Konfiguration und Integration der Feldgeräte in das Automatisierungssystem.

So können die Feldgeräte zwar mittels den aktiven Softwarekomponenten (DTM) und den vom Field Device Tool bereitgestellten Schnittstellen parametriert, jedoch nicht programmiert werden.

Ausgehend von den beschriebenen Nachteilen liegt der Erfindung die Aufgabe zugrunde, die Ausführung der Parametrierung und Konfigurierung von Feldgeräten eines Automatisierungssystems mit der Programmierung der Feldgeräte zusammenzufassen, um so in einfacher Weise eine Integration der Feldgeräte im Automatisierungssystem durchzuführen und ein umfassendes einheitliches Engineering innerhalb des Automatisierungssystems zu gewährleisten.

Diese Aufgabe wird erfindungsgemäß durch ein dezentrales Automatisierungssystem der eingangs genannten Art mit den im Anspruch 1 angegebenen Merkmalen gelöst. Vorteilhafte Ausgestaltungen, Verbesserungen der erfindungsgemäßen Einrichtung sind in weiteren Ansprüchen und in der Beschreibung angegeben.

Das erfindungsgemäße System zur Integration von intelligenten Feldgeräten, wie beispielsweise Motorschutz- und Steuergeräte, Frequenzumrichter, Druck- und Temperaturmessumformer, Durchflussmesser und Stellungsregler, in ein Automatisierungssystem umfasst mehrere über eine Kommunikationsverbindung verbundene Feldgeräte zur Steuerung und Überwachung eines technischen Prozesses oder einer technischen Anlage, wenigstens einem im Automatisierungssystem integriertem ersten Werkzeug zur Verwaltung, Konfiguration, Parametrierung, Bedienung, Beobachtung, Wartung und/oder Diagnose der technischen Anlage, einem zweiten Werkzeug und einer Softwarekomponente des Feldgerätes, wobei das zweite Werkzeug zur Bereitstellung von Standardschnittstellen zur Kommunikation des ersten Werkzeuges mit den Feldgeräten vorgesehen ist und als Kommunikationsschnittstelle für den Datenaustausch zwischen der Softwarekomponente des Feldgerätes und dem ersten Werkzeug ausgeführt ist und die Softwarekomponente zur Konfigurierung und/oder Parametrierung des Feldgerätes dient. Die Softwarekomponente weist Bedienoberflächen zum Konfigurieren, Parametrieren, Bedienen und/oder Beobachten des jeweiligen Feldgerätes auf.

Erfindungsgemäß ist in der Softwarekomponente, die zu einem Feldgerät zugeordnet ist, eine Programmiersoftware zur Programmierung des Feldgerätes als Beschreibung der Automatisierungsfunktion vorgesehen, um eine Integration der Feldgeräte im Automatisierungssystem durchzuführen.

Die Programmiersoftware für die Programmierung des Feldgerätes ist somit Teil der zum jeweiligen Feldgerät gehörenden Softwarekomponente. Die Softwarekomponente enthält somit Bedienoberflächen zum Konfigurieren, Parametrieren, Bedienen und/oder Beobachten sowie zum Programmieren der Verarbeitungsfunktion des jeweiligen Feldgerätes.

Dadurch, dass die Programmierung und Konfigurierung/Parametrierung der Feldgeräte mittels einer Nutzung der als Device Type Manager ausgeführten Softwarekomponente und der vom zweiten Werkzeug, dem Field Device Tool, bereitgestellten Kommunikationsschnittstellen ausführbar sind, wird eine erhebliche Zeit- und Kostenersparnis während der Konfiguration und Integration der Feldgeräte in das Automatisierungssystem erreicht.

Insbesondere lassen sich die vom Device Type Manager (DTM) und dem Field Device Tool (FDT) bereitgestellten Kommunikationswege in vorteilhafter Weise zur Programmierung der Feldgeräte nutzen.

Eine im zweiten Werkzeug und in der Softwarekomponente vorhandene Datenhaltung ist zur Programmierung des jeweiligen Feldgerätes verwendbar, so dass alle zum Feldgerät gehörenden relevanten Daten wie Parameter, Konfigurationsinformationen, Zugriffinformationen oder historische Prozessdaten und Anwendungsprogramme in der Datenhaltung gespeichert werden.

Das Field Device Tool ist in einer ersten Ausführungsform als eigenständiges Tool des Automatisierungssystems ausgeführt. In einer zweiten Ausführungsform ist das Field Device Tool in vorteilhafter Weise jedoch auch im ersten Werkzeug des Automatisierungssystems integrierbar.

Das Verfahren mit dem die Aufgabe weiterhin gelöst wird, ist dem Anspruch 10 zu entnehmen. Dabei werden mittels wenigstens einem ersten Werkzeug Verwaitungsfunktionen, Konfigurationsfunktionen, Parametrierungsfunktionen, Bedienfunktionen, Beobachtungsfunktionen, Wartungsfunktionen und/oder Diagnosediagnosefunktionen der technischen Anlage ausgeführt.

Das jeweilige Feldgerät wird mittels wenigstens einer vom Gerätehersteller bereitgestellten Softwarekomponente konfiguriert und/oder parametriert, wobei mittels wenigstens einem zweiten Werkzeug eine Kommunikationsschnittstelle für den Datenaustausch zwischen der Softwarekomponente des jeweiligen Feldgerätes und dem ersten Werkzeug zur Verfügung gestellt wird.

Basierend auf einer in der Softwarekomponente integrierten Programmiersoftware, beispielsweise entsprechend der Norm IEC61131-3, wird im jeweiligen Feldgerät erfindungsgemäß eine Automatisierungsfunktion bzw. ein Teil einer Automatisierungsfunktion programmiert und das Feldgerät in das vorhandene Automatisierungssystem integriert.

In einer vorteilhaften Ausgestaltung der Erfindung ist vorgesehen, auch speicherprogrammierbare Steuerungen als lokale Feldgeräte einzusetzen, wodurch das erfindungsgemäße System und Verfahren von herkömmlichen Feldgeräten auch auf speicherprogrammierbare Steuerungen erweitert wird.

Anhand der in den folgenden Figuren dargestellten Ausführungsbeispiele sollen die Erfindung sowie vorteilhafte Ausgestaltungen, Verbesserungen und weitere Vorteile der Erfindung näher erläutert und beschrieben werden.

Es zeigen:
- **Fig. 1**: eine Ausführungsform eines erfindungsgemäßen Systems zur Integration von intelligenten Feldgeräten in ein Automatisierungssystem, und
- **Fig. 2**: eine weitere Ausführungsform des erfindungsgemäßen Systems zur Integration einer speicherprogrammierbaren Steuerung in das Automatisierungssystem.

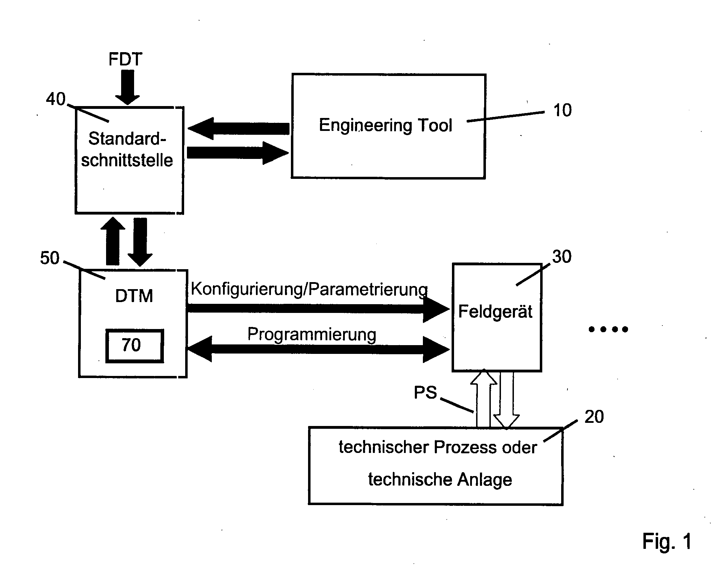

**Fig. 1** zeigt eine Ausführungsform eines erfindungsgemäßen Systems zur Integration von intelligenten Feldgeräten 30, wie Motorschutz- und Steuergeräte, Frequenzumrichter, Druck- und Temperaturmessumformer, Durchflussmesser und Stellungsregler sowie speicherprogrammierbare Steuerungen, in ein als Prozessleitsystem oder ein speicherprogrammierbares Steuerungssystem ausgeführtes Automatisierungssystem mit mehreren über eine nicht dargestellte Kommunikationsverbindung verbundene Feldgeräte 30 zur Steuerung und Überwachung einer technischen Anlage 20.

Das Automatisierungssystem umfasst ein als Engineering-Tool ausgeführtes erstes Werkzeug 10 zur Verwaltung, Konfiguration, Parametrierung, Bedienung, Beobachtung, Wartung und/oder Diagnose der technischen Anlage 20.

Der Informationsaustausch der technischen Anlage 20 mit dem Automatisierungssystem wird mittels der über die Feldgeräte 30 übertragenen Prozesssignale PS realisiert.

Die nachfolgend beschriebene Ausführungsform des erfindungsgemäßen Systems bezieht sich beispielhaft auf die Integration eines Feldgerätes 30 in das Automatisierungssystem.

Eine vom Hersteller der Feldgeräte 30 zur Verfügung gestellte Softwarekomponente 50, der Device Type Manager, welcher Bedienoberflächen zum Konfigurieren, Parametrieren, Bedienen und/oder Beobachten des jeweiligen Feldgerätes 30 aufweist, ist zur Konfigurierung des Feldgerätes 30 vorgesehen. Dazu wird dem Feldgerät 30 der Device Type Manager 50 beispielsweise mittels einer CD (Compact Disk) dem Feldgerätes beigefügt.

Mittels eines eigenständigen zweiten Werkzeuges FDT, welches als Field Device Tool ausgeführt ist, wird dem System eine als Standardschnittstelle 40 ausgeführte Kommunikationsschnittstelle zur Kommunikation des Engineering-Tools 10 mit dem Feldgerät 30 zur Verfügung gestellt.

Erfindungsgemäß ist im Device Type Manager 50 eine Programmiersoftware 70 zur Programmierung des Feldgerätes 30 vorgesehen, welche als eine Beschreibung der Automatisierungsfunktion vorgesehen ist, um so eine Integration des Feldgerätes 30 im Automatisierungssystem durchzuführen.

Durch die Nutzung der Bedienoberflächen des Device Type Managers 50 und der vom Field Device Tool FDT bereitgestellten Kommunikationswege nicht nur für die Konfigurierung und Parametrierung der Feldgeräte 30, sondern auch für ihrer Programmierung der Automatisierungsfunktion, verringert sich der Aufwand für die Konfiguration, Integration, Überwachung und Wartung der Geräte des Automatisierungssystems in entscheidend.

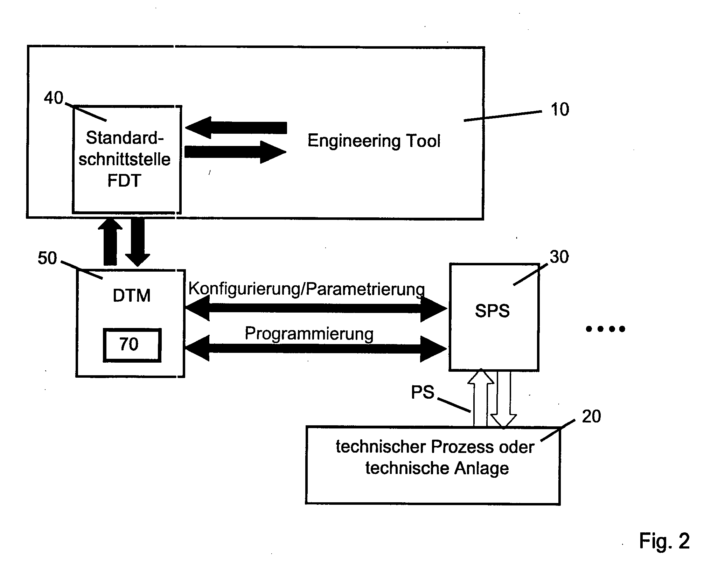

**Fig. 2** zeigt eine weitere Ausführungsform des erfindungsgemäßen Systems zur Integration von intelligenten Feldgeräten 30 in das Automatisierungssystem mit mehreren über eine nicht dargestellte Kommunikationsverbindung verbundene Feldgeräten und/oder speicherprogrammierbare Steuerungen zur Steuerung und Überwachung der technischen Anlage 20, wobei das Field Device Tool im Engineering-Tool zur Verwaltung, Konfiguration, Parametrierung, Bedienung, Beobachtung, Wartung und/oder Diagnose der technischen Anlage 20 integriert ist.

Die nachfolgend beschriebene Ausführungsform des erfindungsgemäßen Systems bezieht sich beispielhaft auf die Integration einer speicherprogrammierbaren Steuerung in das Automatisierungssystem.

Mittels dem Field Device Tool wird dem System die Kommunikationsschnittstelle 40 zur Kommunikation des Engineering-Tools 10 mit der speicherprogrammierbaren Steuerung 30 zur Verfügung gestellt.

Erfindungsgemäß ist im Device Type Manager 50 eine Programmiersoftware 70 zur Programmierung der speicherprogrammierbaren Steuerung 30 vorgesehen, welche als eine Beschreibung der Automatisierungsfunktion vorgesehen ist, um so eine Integration der speicherprogrammierbaren Steuerung 30 im Automatisierungssystem durchzuführen. Dabei werden, wie in Fig. 1 beschrieben, die Bedienoberflächen des Device Type Managers 50 und der vom Field Device Tool FDT bereitgestellten Kommunikationswege für die Konfigurierung, Parametrierung und Programmierung der speicherprogrammierbaren Steuerung 30 genutzt.

## Patentansprüche

1. System zur Integration von intelligenten Feldgeräten (30) in ein Automatisierungssystem mit mehreren über eine Kommunikationsverbindung verbundener Feldgeräte (30) zur Steuerung und Überwachung einer technischen Anlage (20), mit wenigstens einem ersten Werkzeug (10) zur Verwaltung, Konfiguration, Parametrierung, Bedienung, Beobachtung, Wartung und/oder Diagnose der technischen Anlage (20), mit wenigstens einer Softwarekomponente (50) zur Konfigurierung und/oder Parametrierung des jeweiligen Feldgerätes(30), mit wenigstens einem zweiten Werkzeug (FDT) zur Bereitstellung einer Kommunikationsschnittstelle (40) für den Datenaustausch zwischen der Softwarekomponente (50) des jeweiligen Feldgerätes (30) und dem ersten Werkzeug (10), **dadurch gekennzeichnet, dass** in der wenigstens einen Softwarekomponenten (50) eine Programmiersoftware (70) zur Programmierung einer Automatisierungsfunktion und Integration des jeweiligen Feldgerätes (30) im Automatisierungssystem vorhanden ist.

2. System nach Anspruch 1 oder 2, **dadurch gekennzeichnet, dass** die Feldgeräte (30) Motorschutz- und Steuergeräte, Frequenzumrichter, Druck- und Temperaturmessumformer, Durchflussmesser, Stellungsregler und/oder speicherprogrammierbare Steuerungen sind.

3. System nach Anspruch 1 oder 2, **dadurch gekennzeichnet, dass** das Automatisierungssystem als speicherprogrammierbare Steuerungssysteme oder Prozessleitsystem ausgeführt ist.

4. System nach einem der vorherigen Ansprüche, **dadurch gekennzeichnet, dass** die Softwarekomponente (50) Bedienoberflächen zum Konfigurieren, Parametrieren, Bedienen und/oder Beobachten des jeweiligen Feldgerätes (30) umfasst.

5. System nach einem der vorherigen Ansprüche, **dadurch gekennzeichnet, dass** die in der Softwarekomponente (50) integrierte Programmiersoftware (70) eine Beschreibung einer Automatisierungsfunktion umfasst.

6. System nach einem der vorherigen Ansprüche, **dadurch gekennzeichnet, dass** zur Programmierung des Feldgerätes (30) die vom zweiten Werkzeug (FDT) und der Softwarekomponente (50) bereitgestellten Kommunikationswege vorgesehen sind.

7. System nach einem der vorherigen Ansprüche, **dadurch gekennzeichnet, dass** zur Programmierung des Feldgerätes (30) eine im zweiten Werkzeug (FDT) und in der der Softwarekomponente (50) vorhandene Datenhaltung verwendbar ist.

8. System nach einem der vorherigen Ansprüche, **dadurch gekennzeichnet, dass** das zweite Werkzeug (FDT) ein eigenständiges Tool des Automatisierungssystems ist.

9. System nach einem der vorherigen Ansprüche 1 bis 7, **dadurch gekennzeichnet, dass** das zweite Werkzeug (FDT) im ersten Werkzeug (10) des Automatisierungssystems integriert ist.

10. Verfahren zur Integration von intelligenten Feldgeräten (30) in ein Automatisierungssystem mit mehreren über eine Kommunikationsverbindung verbundener Feldgeräte (30) zur Steuerung und Überwachung einer technischen Anlage (20), wobei
- mittels wenigstens einem ersten Werkzeuges (10) Verwaltungsfunktionen, Konfigurationsfunktionen, Parametrierungsfunktionen, Bedienfunktionen, Beobachtungsfunktionen, Wartungsfunktionen und/oder Diagnosediagnosefunktionen der technischen Anlage (20) ausgeführt werden,
- mittels wenigstens einer Softwarekomponente (50) das jeweilige Feldgerät (30) konfiguriert und/oder parametriert wird,
- mittels wenigstens einem zweiten Werkzeug (FDT) eine Kommunikationsschnittstelle (40) für den Datenaustausch zwischen der Softwarekomponente (50) des jeweiligen Feldgerätes (30) und dem ersten Werkzeug (10) bereitgestellt wird, und
- mittels einer in der wenigstens einen Softwarekomponenten (50) vorhandenen Programmiersoftware (70) das jeweilige Feldgerät (30) programmiert und in das Automatisierungssystem integriert wird.

11. Verfahren nach Anspruch 10, **dadurch gekennzeichnet, dass** in der Softwarekomponente (50) Bedienoberflächen zum Konfigurieren, Parametrieren, Bedienen und/oder Beobachten des jeweiligen Feldgerätes (30) abgelegt werden.

12. Verfahren nach Anspruch 10 oder 11, **dadurch gekennzeichnet, dass** mittels der in der Softwarekomponente (50) integrierten Programmiersoftware (70) eine Automatisierungsfunktion beschrieben wird.

13. Verfahren nach Anspruch 10 bis 12, **dadurch gekennzeichnet, dass** mittels des zweiten Werkzeuges (FDT) und der Softwarekomponente (50) Kommunikationswege zur Programmierung des Feldgerätes (30) bereitgestellt werden.

14. Verfahren nach einem der Ansprüche 10 bis 13, **dadurch gekennzeichnet, dass** zur Programmierung des Feldgerätes (30) eine im zweiten Werkzeug (FDT) und in der der Softwarekomponente (50) vorhandene Datenhaltung verwendet wird.

15. Verfahren nach einem der Ansprüche 10 bis 14, **dadurch gekennzeichnet, dass** das zweite Werkzeug (FDT) als eigenständiges Tool innerhalb des Automatisierungssystems integriert wird.

16. Verfahren nach einem der Ansprüche 10 bis 14, **dadurch gekennzeichnet, dass** das zweite Werkzeug (FDT) im ersten Werkzeug (10) des Automatisierungssystems integriert wird.
